# EUROPEAN PATENT APPLICATION

(11) **EP 4 667 729 A1**
(43) Date of publication of application: **24.12.2025**
(21) Application number: 25176826.3
(22) Date of filing: 15.05.2025
(51) Int. Cl.: F02C 7/232

(54) **GAS TURBINE ENGINE INCLUDING FUEL INJECTOR**

(30) Priority: 18.06.2024 US 202418746642
(71) Applicant: General Electric Company, Cincinnati, Ohio 45215 (US)
(72) Inventor: OVERMAN, Nicholas, Evendale, 45215 (US)
(74) Representative: Openshaw & Co.

(57) **Abstract**

A gas turbine engine (10) including a fuel injector having an outer valve body (110) with an inner passage (118), a wall (116) at least partially enclosing the inner passage (118), the wall (116) having an inner surface (112), an outer surface (114), and one or more channels (128) passing through the wall (116) between the outer surface (114) of the wall (116) and the inner surface (112) of the wall (116), and a retractable valve body (108) positioned within the inner passage (118) of the outer valve body (110). The retractable valve body (108) has one or more slots (130) in fluid communication with the fluid spin chamber (122). The retractable valve body (108) is positioned within the inner passage (118) to move along a reciprocating axis (101) at one or more valve positions including an advanced valve position, a retracted valve position, an open valve position, and a closed valve position.

## Description

### TECHNICAL FIELD

The present disclosure relates generally to gas turbine engines including fuel injectors, such as gas turbine engines for aircraft.

### BACKGROUND

Gas turbine engines generally include a compressor section, a combustor section, and a turbine section. A fuel injector may inject fuel into the combustor section arranged in a turbo-engine to generate combustion gases for driving the turbine section.

### BRIEF DESCRIPTION OF THE DRAWINGS

Features and advantages will be apparent from the following, more particular, description of various exemplary embodiments, as illustrated in the accompanying drawings, wherein like reference numbers generally indicate identical, functionally similar, or structurally similar elements.
FIG. 1 is a schematic cross-sectional diagram of a turbine engine, taken along a longitudinal centerline axis of the turbine engine, according to the present disclosure.
FIG. 2A is a schematic cross-sectional view of a first fuel injector isolated from the turbine engine of FIG. 1, according to the present disclosure.
FIG. 2B is a schematic cross-sectional detail view of a portion of the first fuel injector of FIG. 2A, showing detail 2B in FIG. 2A, according to the present disclosure.
FIG. 3A is a schematic cross-sectional view of the first fuel injector in a closed valve position, according to the present disclosure.
FIG. 3B is a schematic cross-sectional detail view of a portion of the first fuel injector in the closed valve position of FIG. 3A, showing detail 3B in FIG. 3A, according to the present disclosure.
FIG. 4A is a schematic cross-sectional view of a retractable valve body in an open valve position, according to the present disclosure.
FIG. 4B is a cross-sectional detail view of the retractable valve body in the open valve position of FIG. 4A, showing detail 4B in FIG. 4A, according to the present disclosure.
FIG. 5A is a schematic cross-sectional view of the retractable valve body in a partially open valve position, according to the present disclosure.
FIG. 5B is a schematic cross-sectional detail view of a portion of the retractable valve body in the partially open valve position of FIG. 5A, showing detail 5B in FIG. 5A, according to the present disclosure.
FIG. 6 is a schematic cross-sectional view of a second retractable valve body, according to the present disclosure.
FIG. 7 is a schematic cross-sectional view of a third retractable valve body, according to the present disclosure.
FIG. 8 is a schematic view of a portion of a fourth retractable valve body, according to the present disclosure.
FIG. 9 is a schematic view of a portion of a fifth retractable valve body, according to the present disclosure.
FIG. 10A is a schematic view of a sixth retractable valve body having three orifices, according to the present disclosure.
FIG. 10B is a schematic view of a seventh retractable valve body having three orifices in a staggered and overlapping configuration, according to the present disclosure.
FIG. 11A is a schematic cross-sectional view of a second fuel injector in a closed valve position, isolated from the turbine engine of FIG. 1, according to the present disclosure.
FIG. 11B is a schematic cross-sectional view of a second fuel injector in an open valve position, according to the present disclosure.
FIG. 12A is a schematic cross-sectional view of a piston-type fuel injector, including a piston in a closed valve position, isolated from the turbine engine of FIG. 1, according to the present disclosure.
FIG. 12B is a schematic cross-sectional detail view of the piston-type fuel injector showing detail 12B of FIG. 12A, according to the present disclosure.
FIG. 13A is a schematic cross-sectional view of the piston-type fuel injector, including the piston an open valve position, according to the present disclosure.
FIG. 13B is a schematic cross-sectional detail view of the piston-type fuel injector showing detail 13B of FIG. 13A, according to the present disclosure.
FIG. 14 is a cross-sectional view of a first piston housing of the piston-type fuel injector of FIG. 12A, according to the present disclosure.
FIG. 15 is a schematic cross-sectional side view of a portion of the first piston housing, according to the present disclosure.
FIG. 16 is a schematic cross-sectional side view of a portion of a second piston housing having an oval channel, according to the present disclosure.
FIG. 17 is a schematic cross-sectional side view of a portion of a third piston housing having a slot-shaped channel, according to the present disclosure.
FIG. 18 is a schematic cross-sectional side view of a fourth piston housing having an angled channel, according to the present disclosure.
FIG. 19 is a cross-sectional view of a fifth piston housing, having a conical channel, according to the present disclosure.
FIG. 20 is a diagram of a method of injecting fuel into a combustion section, according to the present disclosure.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments of the present disclosure are discussed in detail below. While specific embodiments are discussed, this is done for illustration purposes only. A person skilled in the relevant art will recognize that other components and configurations may be used without departing from the present disclosure.

As used herein, the terms "first," "second," "third," etc., may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

The terms "forward" and "aft" refer to relative positions within a turbine engine or a vehicle, and refer to the normal operational attitude of the turbine engine or the vehicle. For example, with regard to a high-bypass turbine engine, forward refers to a position closer to an engine inlet and aft refers to a position closer to an engine nozzle or an exhaust. In one example, in a reverse flow turbine engine, forward refers to a position closer to the engine nozzle or the exhaust and aft refers to a position closer to the engine inlet.

The terms "coupled," "fixed," "attached," "connected," and the like, refer to both direct coupling, fixing, attaching, or connecting, as well as indirect coupling, fixing, attaching, or connecting through one or more intermediate components or features, unless otherwise specified herein.

The singular forms "a," "an," and "the" include plural references unless the context clearly dictates otherwise.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

As used herein, a "closed valve position" of a variable fuel flow system is when components of the variable fuel flow system cover one or more fuel injector flow paths to prevent fuel from flowing to the one or more fuel injector flow paths.

As used herein, a "partially open valve position" of the variable fuel flow system is when the components of the variable fuel flow system partially cover and partially uncover the fuel injector flow paths such that the fuel flows through the partially uncovered fuel injector flow paths.

As used herein, a "fully open valve position" of the variable fuel flow system is when the components of the variable fuel flow system fully (e.g., entirely) uncover the fuel injector flow paths such that the fuel flows through the fully uncovered fuel injector flow paths.

Approximating language, as used herein throughout the specification and claims, is applied to modify any quantitative representation that could permissibly vary without resulting in a change in the basic function to which it is related. Accordingly, a value modified by a term or terms, such as "about," "approximately," "generally," and "substantially" is not to be limited to the precise value specified. In at least some instances, the approximating language may correspond to the precision of an instrument for measuring the value, or the precision of the methods or the machines for constructing the components, or the systems or manufacturing the components or the systems. For example, the approximating language may refer to being within a one, a two, a four, a ten, a fifteen, or a twenty percent margin in either individual values, range(s) of values or endpoints defining range(s) of values.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The present disclosure provides for a fuel injector having an outer valve body with an inner passage, a wall at least partially enclosing the inner passage, the wall having an inner surface, an outer surface, and one or more channels passing through the wall between the outer surface of the wall and the inner surface of the wall, and a retractable valve body positioned within the inner passage of the outer valve body. The retractable valve body has one or more slots in fluid communication with a fluid spin chamber. The retractable valve body is positioned within the inner passage to move along a reciprocating axis at one or more valve positions including an advanced valve position, a retracted valve position, an open valve position, and a closed valve position.

The fuel injector of the present disclosure varies the fuel flow through the fuel injector. The fuel injector of the present disclosure may create a higher delta pressure at or near the point of injection during all operating conditions of the turbine engine. For example, the fuel injector may include a retractable valve body and an actuation mechanism coupled to the retractable valve body. The retractable valve body may be disposed within an inner passage of a fuel injector and include slots for directing the fuel through the retractable valve body between an inner passage and a fluid spin chamber of the retractable valve body. The retractable valve body can slide back and forth within the inner passage along a reciprocating axis to open and to close the orifices of the fuel injector. As the retractable valve body slides back and forth, the orifices on the retractable valve body partially align or fully align with channels of an outer valve body in the fuel injectors. The alignment creates a variable inlet area of the orifices of the fuel injectors for generating a higher delta pressure across the fuel injectors as compared to fuel injectors without the present disclosure.

In some embodiments, a pressure atomizer is disposed within the fuel injector for assisting in atomizing the fuel. In some embodiments, the actuation mechanisms are passive actuation mechanisms (e.g., springs, memory material, or the like) for passively moving the pistons. In some embodiments, the actuation mechanisms are active actuation mechanisms (e.g., hydraulic actuators, pneumatic actuators, mechanical actuators, or the like) that are controlled to move the pistons.

Accordingly, as compared to turbine engines without the benefit of the present disclosure, the fuel injector of the present disclosure provides several advantages. For example, the fuel injector adjusts the delta pressure for increasing the atomization of the fuel and the air. Increased atomization and mixing of the fuel and the air makes the fuel and air mixture easier to ignite and to combust, as compared to turbine engines without the benefit of the present disclosure. The fuel injector thus provides for improved ignition capability, especially, for cold fuels (e.g., at higher altitudes) or high viscosity fuels by increasing the atomization of the fuel and the air. The fuel injector leads to improved sub-idle efficiency and low power efficiency of the combustor due to the increased atomization, and lower smoke generation at high power operation, as compared to turbine engines without the benefit of the present disclosure.

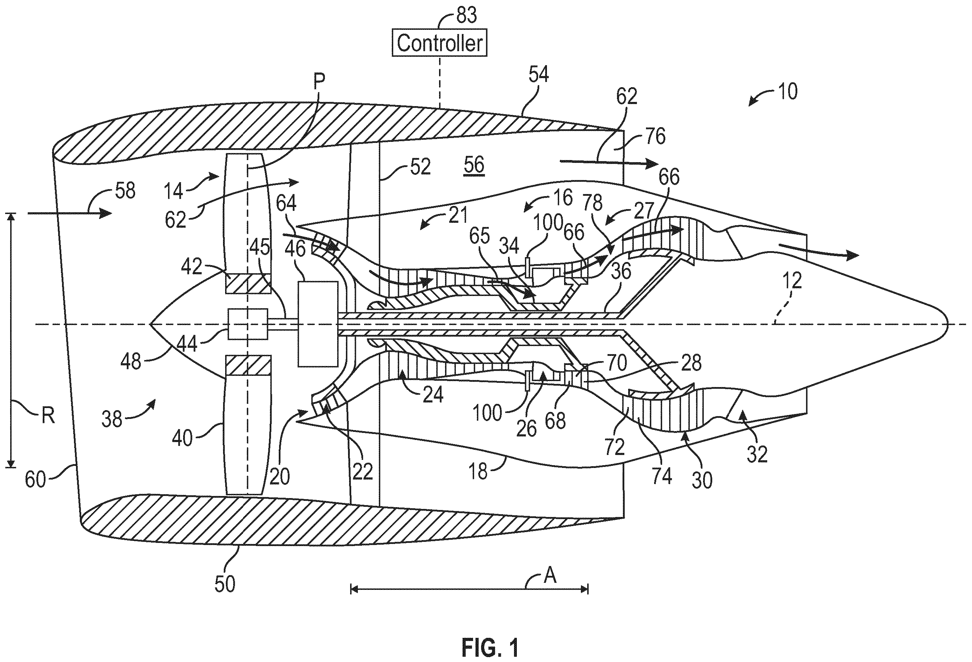

Referring now to the drawings, FIG. 1 is a schematic cross-sectional diagram of a turbine engine 10, taken along a longitudinal centerline axis 12 of the turbine engine 10, according to an embodiment of the present disclosure. As shown in FIG. 1, the turbine engine 10 defines an axial direction A (extending parallel to the longitudinal centerline axis 12 provided for reference) and a radial direction R that is normal to the axial direction A. In general, the turbine engine 10 includes a fan section 14 and a turbo-engine 16 disposed downstream from the fan section 14.

The turbo-engine 16 includes, in serial flow relationship, a compressor section 21, a combustion section 26, and a turbine section 27. The turbo-engine 16 is substantially enclosed within an outer casing 18 that is substantially tubular and defines an annular inlet 20. As schematically shown in FIG. 1, the compressor section 21 includes a booster or a low pressure (LP) compressor 22 followed downstream by a high pressure (HP) compressor 24. The combustion section 26 is downstream of the compressor section 21. The turbine section 27 is downstream of the combustion section 26 and includes a high pressure (HP) turbine 28 followed downstream by a low pressure (LP) turbine 30. The turbo-engine 16 further includes a jet exhaust nozzle section 32 that is downstream of the turbine section 27, a high-pressure (HP) shaft 34 or a spool, and a low-pressure (LP) shaft 36. The HP shaft 34 drivingly connects the HP turbine 28 to the HP compressor 24. The HP turbine 28 and the HP compressor 24 rotate in unison through the HP shaft 34. The LP shaft 36 drivingly connects the LP turbine 30 to the LP compressor 22. The LP turbine 30 and the LP compressor 22 rotate in unison through the LP shaft 36. The compressor section 21, the combustion section 26, the turbine section 27, and the jet exhaust nozzle section 32 together define a core air flow path.

For the embodiment depicted in FIG. 1, the fan section 14 includes a fan 38 (e.g., a variable pitch fan) having a plurality of fan blades 40 coupled to a disk 42 in a spaced apart manner. As depicted in FIG. 1, the fan blades 40 extend outwardly from the disk 42 generally along the radial direction R. In the case of a variable pitch fan, the plurality of fan blades 40 are rotatable relative to the disk 42 about a pitch axis P by virtue of the fan blades 40 being operatively coupled to an actuation member 44 configured to collectively vary the pitch of the fan blades 40 in unison. The fan blades 40, the disk 42, and the actuation member 44 are together rotatable about the longitudinal centerline axis 12 via a fan shaft 45 that is powered by the LP shaft 36 across a power gearbox, also referred to as a gearbox assembly 46. In this way, the fan 38 is drivingly coupled to, and powered by, the turbo-engine 16, and the turbine engine 10 is an indirect drive engine. The gearbox assembly 46 is shown schematically in FIG. 1. The gearbox assembly 46 is a reduction gearbox assembly for adjusting the rotational speed of the fan shaft 45 and, thus, the fan 38 relative to the LP shaft 36 when power is transferred from the LP shaft 36 to the fan shaft 45.

Referring still to the exemplary embodiment of FIG. 1, the disk 42 is covered by a fan hub 48 that is aerodynamically contoured to promote an airflow through the plurality of fan blades 40. In addition, the fan section 14 includes an annular fan casing or a nacelle 50 that circumferentially surrounds the fan 38 and at least a portion of the turbo-engine 16. The nacelle 50 is supported relative to the turbo-engine 16 by a plurality of outlet guide vanes 52 that are circumferentially spaced about the nacelle 50 and the turbo-engine 16. Moreover, a downstream section 54 of the nacelle 50 extends over an outer portion of the turbo-engine 16, and, with the outer casing 18, defines a bypass airflow passage 56 therebetween.

During operation of the turbine engine 10, a volume of air 58 enters the turbine engine 10 through an inlet 60 of the nacelle 50 or the fan section 14. As the volume of air 58 passes across the fan blades 40, a first portion of air, also referred to as bypass air 62, is routed into the bypass airflow passage 56, and a second portion of air, also referred to as core air 64, is routed into the upstream section of the core air flow path through the annular inlet 20 of the LP compressor 22. The ratio between the bypass air 62 and the core air 64 is commonly known as a bypass ratio. The pressure of the core air 64 is then increased, generating compressed air 65. The compressed air 65 is routed through the HP compressor 24 and into the combustion section 26, where the compressed air 65 is mixed with fuel and ignited to generate combustion gases 66.

The combustion gases 66 are routed into the HP turbine 28 and expanded through the HP turbine 28 where a portion of thermal energy or kinetic energy from the combustion gases 66 is extracted via one or more stages of HP turbine stator vanes 68 and HP turbine rotor blades 70 that are coupled to the HP shaft 34. This causes the HP shaft 34 to rotate, thereby supporting operation of the HP compressor 24 (self-sustaining cycle). In this way, the combustion gases 66 do work on the HP turbine 28. The combustion gases 66 are then routed into the LP turbine 30 and expanded through the LP turbine 30. Here, a second portion of the thermal energy or the kinetic energy is extracted from the combustion gases 66 via one or more stages of LP turbine stator vanes 72 and LP turbine rotor blades 74 that are coupled to the LP shaft 36. This causes the LP shaft 36 to rotate, thereby supporting operation of the LP compressor 22 (self-sustaining cycle) and rotation of the fan 38 via the gearbox assembly 46. In this way, the combustion gases do work on the LP turbine 30.

The combustion gases 66 are subsequently routed through the jet exhaust nozzle section 32 of the turbo-engine 16 to provide propulsive thrust. Simultaneously, the bypass air 62 is routed through the bypass airflow passage 56 before being exhausted from a fan nozzle exhaust section 76 of the turbine engine 10, also providing propulsive thrust. The HP turbine 28, the LP turbine 30, and the jet exhaust nozzle section 32 at least partially define a hot gas path 78 for routing the combustion gases 66 through the turbo-engine 16.

The turbine engine 10 includes a fuel system that provides fuel to the combustion section 26. The fuel is mixed with the compressed air 65 from the HP compressor 24 and ignited in the combustion section 26 to produce the combustion gases 66. The fuel system may include a fuel tank or a fuel supply for storing the fuel therein, a fuel supply line, and a fuel injector. The fuel is provided from the fuel tank, along the fuel supply line to the fuel injector, which introduces the fuel into the combustion section 26. The fuel system may include one or more flow control devices or valves along the fuel supply line for controlling an amount of the fuel provided to the combustion section 26. The fuel injector may be provided at a forward end of the combustion section 26. Accordingly, fuel provided along the fuel supply line is provided at a forward end of the combustion section 26.

A controller 83 is in communication with the turbine engine 10 for controlling aspects of the turbine engine 10. For example, the controller 83 is in two-way communication with the turbine engine 10 for receiving signals from various sensors and control systems of the turbine engine 10 and for controlling components of the turbine engine 10, as detailed further below. The controller 83, or components thereof, may be located onboard the turbine engine 10, onboard the aircraft, or can be located remote from each of the turbine engine 10 and the aircraft. The controller 83 can be a Full Authority Digital Engine Control (FADEC) that controls aspects of the turbine engine 10.

The controller 83 may be a standalone controller or may be part of an engine controller to operate various systems of the turbine engine 10. In this embodiment, the controller 83 is a computing device having one or more processors and a memory. The one or more processors can be any suitable processing device, including, but not limited to, a microprocessor, a microcontroller, an integrated circuit, a logic device, a programmable logic controller (PLC), an application specific integrated circuit (ASIC), or a Field Programmable Gate Array (FPGA). The memory can include one or more computer-readable media, including, but not limited to, non-transitory computer-readable media, a computer readable non-volatile medium (e.g., a flash memory), a RAM, a ROM, hard drives, flash drives, or other memory devices.

The memory can store information accessible by the one or more processors, including computer-readable instructions that can be executed by the one or more processors. The instructions can be any set of instructions or a sequence of instructions that, when executed by the one or more processors, cause the one or more processors and the controller 83 to perform operations. The controller 83 and, more specifically, the one or more processors are programmed or configured to perform these operations, such as the operations discussed further below. In some embodiments, the instructions can be executed by the one or more processors to cause the one or more processors to complete any of the operations and functions for which the controller 83 is configured, as will be described further below. The instructions can be software written in any suitable programming language or can be implemented in hardware. Additionally, or alternatively, the instructions can be executed in logically or virtually separate threads on the processors. The memory can further store data that can be accessed by the one or more processors.

The technology discussed herein makes reference to computer-based systems and actions taken by, and information sent to and from, computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

The turbine engine 10 depicted in FIG. 1 is by way of example only. In other exemplary embodiments, the turbine engine 10 may have any other suitable configuration. For example, in other exemplary embodiments, the fan 38 may be configured in any other suitable manner (e.g., as a fixed pitch fan) and further may be supported using any other suitable fan frame configuration. The turbine engine 10 may also be a direct drive engine, which does not have a power gearbox. The fan speed is the same as the LP shaft speed for a direct drive engine. Moreover, in other exemplary embodiments, any other suitable number or configuration of compressors, turbines, shafts, or a combination thereof may be provided. In still other exemplary embodiments, aspects of the present disclosure may be incorporated into any other suitable turbine engine, such as, for example, turbofan engines, propfan engines, turbojet engines, turboprop, or turboshaft engines.

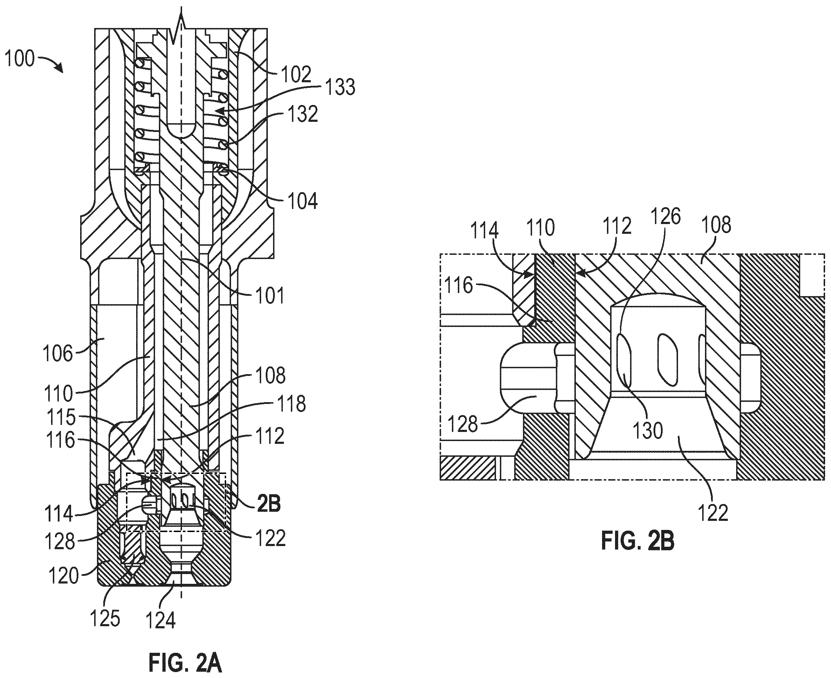

FIG. 2A is a schematic cross-sectional view of a first fuel injector isolated from the turbine engine of FIG. 1, according to the present disclosure. FIG. 2B is a schematic cross-sectional detail view of a portion of the first fuel injector of FIG. 2A, showing detail 2B in FIG. 2A, according to the present disclosure. The first fuel injector 100 includes a fuel nozzle housing 106, a fuel nozzle tip 120, and an outer valve body 110. The outer valve body 110 includes a wall 116 at least partially enclosing an inner passage 118. The wall 116 has an inner surface 112 facing the inner passage 118, an outer surface 114 on an opposite side of the wall 116 from the inner passage 118, and one or more channels 128 passing through the wall 116 between the outer surface 114 and the inner surface 112.

A retractable valve body 108 is positioned within the inner passage 118. The retractable valve body 108 is movable within the inner passage 118 along a reciprocating axis 101 between an advanced valve position and a retracted valve position. The advanced valve position is a valve position such that the retractable valve body 108 is positioned along the reciprocating axis 101 closest to a secondary fuel nozzle 124, and the retracted valve position is a valve position such that the retractable valve body 108 is positioned along the reciprocating axis 101 furthest from the secondary fuel nozzle 124. Other configurations, the secondary fuel nozzle can be the primary or solitary fuel nozzle within fuel injector 100. For example, the fuel injector 100 provides a higher pressure drop at the tip such that the secondary nozzle can be the only nozzle in the fuel injector 100.

The retractable valve body 108 has a fluid spin chamber 122 and one or more slots 130 fluidly connecting the fluid spin chamber 122 to a respective orifice 126 positioned to face the inner passage 118. Motion of the retractable valve body 108 along the reciprocating axis 101 between the advanced valve position and the retracted valve position causes the retractable valve body 108 to become positioned at one or more valve positions including the advanced valve position, the retracted valve position, an open valve position that at least partially aligns at least one of the one or more slots 130 with at least one of the one or more channels 128 to allow fluid communication between the fluid spin chamber 122 of the retractable valve body 108 and the at least one of the one or more channels 128, and a closed valve position where the fluid spin chamber 122 of the retractable valve body 108 is closed from fluid communication with the one or more channels 128.

In some embodiments, the advanced valve position is an open valve position. In some embodiments, the advanced valve position is a closed valve position. In some embodiments, the retracted valve position is an open valve position. In some embodiments, the retracted valve position is a closed valve position. In some embodiments, the retracted valve position is a closed valve position, and the advanced valve position is a closed valve position with the open valve position located between the advanced valve position and the closed valve position. In some embodiments, the retracted valve position is a closed valve position, and the advanced valve position is an open valve position.

The first fuel injector 100 also includes a spring housing 102 with a spring chamber 133 including a spring 132 and a spring retainer 104. Fuel is introduced to the spring housing 102 and the fuel passes along the inner passage 118 between the retractable valve body 108 and the outer valve body 110 to a side passage 115. When the retractable valve body 108 is in the closed valve position, fuel in the side passage 115 accumulates in the one or more channels 128. When the fuel is sufficiently pressurized to elongate the spring 132 and to transition the retractable valve body 108 from the closed valve position to the open valve position, the fuel flows from the one or more channels 128 into the one or more slots 130. The one or more slots 130 impart rotational motion (e.g., a swirling motion around the reciprocating axis 101) on the fuel as the fuel passes into the fluid spin chamber 122 of the retractable valve body 108. The rotational motion may be beneficial to performance of the first fuel injector 100 because the rotational motion reduces coking on surfaces contacted by the fuel. Once in the fluid spin chamber 122 of the retractable valve body 108, the fuel flows out of the secondary fuel nozzle 124 and into the combustion section 26 where the fuel is combusted to generate thrust.

In some embodiments, the first fuel injector 100 also includes a primary fuel nozzle 125. Even when the retractable valve body 108 is in the closed valve position, some of the fuel can pass from the side passage 115 to the primary fuel nozzle 125 and into the combustion section 26 (FIG. 1) where the fuel is combusted to generate thrust.

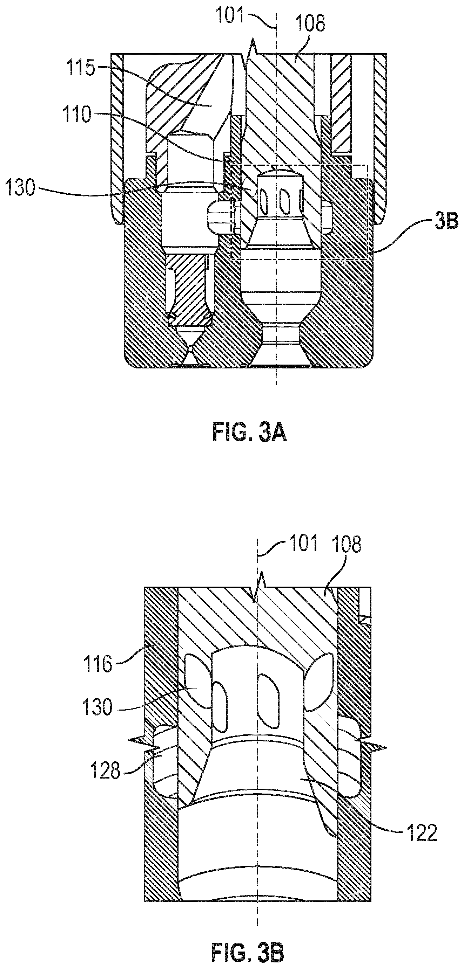

FIG. 3A is a schematic cross-sectional view of the first fuel injector in a closed valve position, according to the present disclosure. FIG. 3B is a schematic cross-sectional detail view of a portion of the first fuel injector in the closed valve position of FIG. 3A, showing detail 3B in FIG. 3A, according to the present disclosure. FIG. 3A, with FIG. 3B showing detail 3B, depicts the retractable valve body 108 in the closed valve position. As depicted in FIG. 3B, the slot 130 is misaligned with the channel 128 that passes through the wall 116 of the outer valve body 110. Fuel that accumulates in the side passage 115 and the channel 128 is prevented from passing into the slot 130 of the retractable valve body 108. Some fuel may, however, leak through a tight clearance gap between an inner diameter of the inner passage 118 (FIG. 2A_ and an outer diameter of the retractable valve body 108.

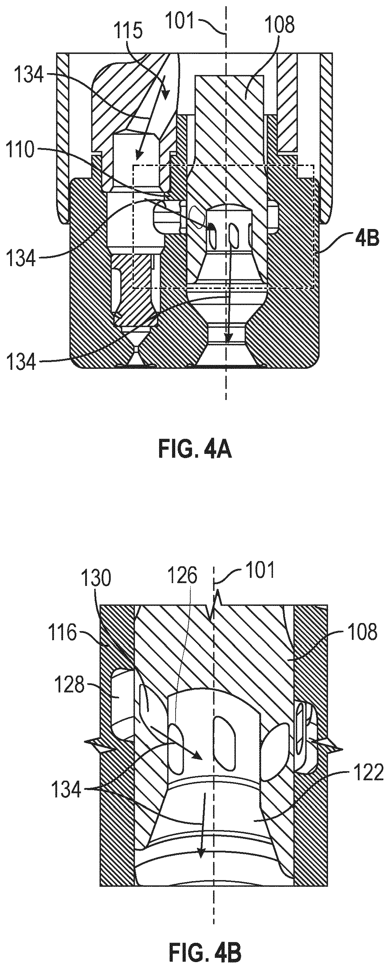

FIG. 4A is a schematic cross-sectional view of a retractable valve body in an open valve position, according to the present disclosure. FIG. 4B is a cross-sectional detail view of the retractable valve body in the open valve position of FIG. 4A, showing detail 4B in FIG. 4A, according to the present disclosure. FIG. 4A, with FIG. 4B showing detail 4B, depicts the retractable valve body 108 in the open valve position. As discussed above with respect to FIGS. 2A and 2B, pressurized fuel is used to transition the retractable valve body 108 from the closed valve position to the open valve position. In the open valve position depicted in FIG. 4B, the orifice 126 of the slot 130 aligns with the channel 128 that passes through the wall 116 of the outer valve body 110. Thus, fuel follows a fuel path 134 from the side passage 115 to the channel 128, from the channel 128 into the slot 130, from the slot 130 into the fluid spin chamber 122, from the fluid spin chamber 122 to the secondary fuel nozzle 124 (FIG 2A), and out of the secondary fuel nozzle 124 into the combustion section 26 (FIG. 1) where the fuel is combusted to generate thrust.

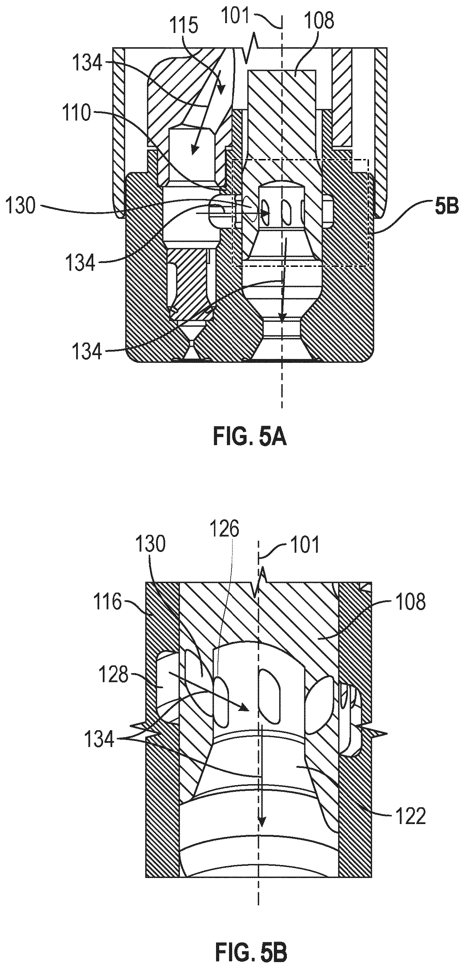

FIG. 5A is a schematic cross-sectional view of the retractable valve body in a partially open valve position, according to the present disclosure. FIG. 5B is a schematic cross-sectional detail view of a portion of the retractable valve body in the partially open valve position of FIG. 5A, showing detail 5B in FIG. 5A, according to the present disclosure. FIG. 5A, with FIG. 5B showing detail 5B, depicts the retractable valve body 108 in a partially open valve position. As the retractable valve body 108 transitions between the open valve position and the closed valve position, the retractable valve body 108 enters a partially open valve position. In the partially open valve position depicted in FIG. 5B, the orifice 126 of the slot 130 partially aligns with the channel 128 that passes through the wall 116 of the outer valve body 110. Thus, the fuel follows the fuel path 134 as discussed with respect to FIGS. 4A and 4B to be combusted in the combustion section 26 (FIG 1). A partially open valve position can be actively or passively controlled. A partially open valve position can provide a high pressure drop near the fuel nozzle tip 120, and the high-pressure drop can provide good atomization and mixing of the fuel. The partially open valve position, of FIGS. 5A and 5B, provides a narrow fluid passage at lower flows such that a high-pressure drop can also help ignition. At the fully open valve position of FIGS. 4A and 4B, a wider fluid passage provides higher fluid flow rates such that a fuel supply pressure, fuel pump size, and associated weight can be minimized. The partially open valve position also provides a smooth and continuous transition from the closed valve position to the open valve position to stabilize fluid flow through the fuel injector 100 and to stabilize the spring 132 (FIG. 2A), while also maintaining a relatively high pressure drop at the fuel nozzle tip 120 (FIG. 2A) at all flow conditions.

While FIGS. 2A, 2B, 3A, 3B, 4A, 4B, 5A, and 5B depict a particular embodiment of the first fuel injector 100, several additional variations and configurations of each of the features discussed above are possible and within the scope of the disclosed. The following figures depict some additional non-limiting variations and configurations that are shown and labeled with reference numerals, but not explicitly described herein. Elements of the following figures with reference numerals in the 600-series, 700-series, 800-series, 900-series, 1000-series, 1100-series, 1200-series, 1600-series, 1700-series, 1800-series, and 1900-series, but not described below, are identical to those corresponding elements in FIG. 2A, with otherwise identical reference numerals in the 100-series.

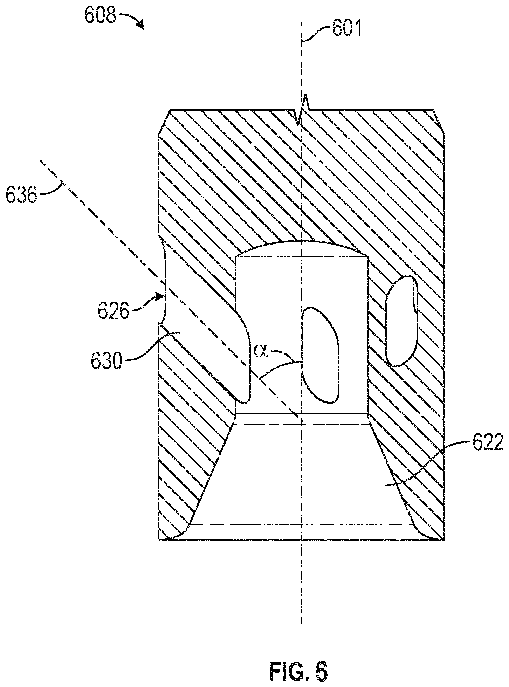

FIG. 6 is a schematic cross-sectional view of a second retractable valve body 608 embodiment. The cross section is taken along a plane including a reciprocating axis 601 and a through axis 636 passing along a slot 630 from an orifice 626 to a fluid spin chamber 622. The through axis 636 defines an angle alpha with the reciprocating axis 601. When fuel passes from the slot 630 to the fluid spin chamber 622, the fuel has momentum with components parallel and perpendicular to the reciprocating axis 601. The angle alpha ranges from twenty degrees to ninety degrees. When the angle alpha is near twenty degrees, the momentum of the fuel is more aligned in the direction of the reciprocating axis 601 than when alpha is near ninety degrees. When alpha is near ninety degrees, the momentum of the fuel is more perpendicular to the reciprocating axis 601 than when alpha is near twenty degrees. When the momentum of the fuel has a component that is perpendicular to the reciprocating axis 601, the fuel develops a spinning motion around the reciprocating axis 601, increased turbulence, or both. Increased spinning motion around the reciprocating axis 601 and increased turbulence may impact, for example, the rate of coke buildup on surfaces contacted by the fuel.

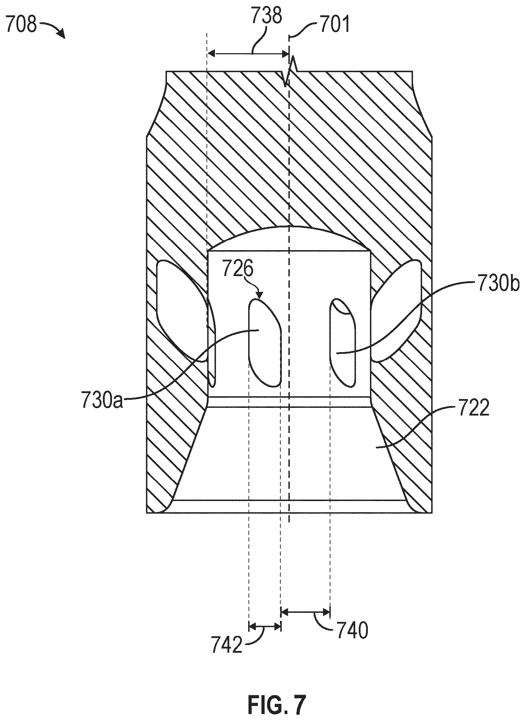

FIG. 7 is a schematic cross-sectional view of a third retractable valve body 708 embodiment. The third retractable valve body 708 has a fluid spin chamber 722 with an inner radius 738 extending from a reciprocating axis 701. The third retractable valve body 708 has one or more slots including a first slot 730a and a nearest neighbor slot 730b. Each of the one or more slots has an orifice 726 with an orifice width 742. Each of the one or more slots (e.g., 730a) are spaced apart from each respective nearest neighbor slot (e.g., 730b) by a slot spacing 740 distance. By varying the inner radius 738, the orifice width 742, and the slot spacing 740, the flow of the fuel passing into the fluid spin chamber 722 is controlled. For example, a smaller orifice width 742 with a larger slot spacing 740 may provide a lower fuel flow rate (and/or a higher delta pressure) when the third retractable valve body 708 is in a fully open valve position as compared to a larger orifice width 742 with a smaller slot spacing 740. Similarly, a smaller inner radius 738 may provide a lower fuel flow rate (and/or a higher delta pressure) when the third retractable valve body 708 is in a fully open valve position as compared to a larger inner radius 738. In some embodiments, the slot spacing 740 ranges from zero to a quantity equal to the inner radius 738 minus one half the orifice width 742.

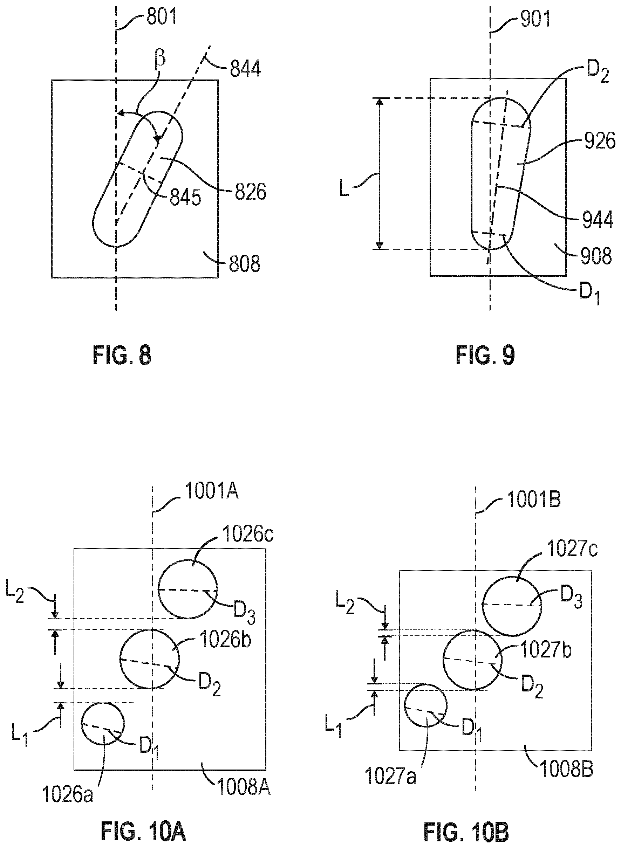

FIG. 8 depicts a portion of a fourth retractable valve body 808 having a tilted orifice 826. The tilted orifice 826 has a long axis 844 and a short axis 845. The long axis 844 defines an angle beta (β) with a reciprocating axis 801. The magnitude of the angle beta (β) ranges from zero degrees to ninety degrees (e.g., minus forty-five degrees to forty-five degrees such as zero degrees to forty-five degrees). The angle beta (β) impacts a change in the flow of the fuel as the fourth retractable valve body 808 changes position along the reciprocating axis 801. For example, the angle beta (β) impacts an extent of alignment between the tilted orifice 826 and a channel (e.g., the channel 128 of FIG. 2A) of an outer valve body (e.g., the outer valve body 110 of FIG. 2A) as the fourth retractable valve body 808 advances along the reciprocating axis 801. The angle beta (β) can be used to control a relationship between increasing flow of fuel through the fuel injector 100 (FIG. 1) and a fuel spray angle at a fuel nozzle exit in such a manner that the fuel spray angle can be maintained constant, the fuel spray angle can decrease, or the fuel spray angle can increase as flow increases. For example, a smaller spray angle in combination with a low fuel flow rate can locally enrich and prevent lean-blow-out in the combustion section 26, whereas a wider spray angle in combination with a higher fuel flow rate can provide uniform combustion and higher efficiency. In some embodiments, the gas turbine engine 10 (FIG. 1) includes two or more fuel injectors having different beta angles such that some of the two or more fuel injectors change a spray angle at different fluid flow conditions whereas other of the two or more fuel injectors have a constant spray angle.

FIG. 9 depicts a portion of a fifth retractable valve body 908 having a tapered orifice 926. The tapered orifice 926 has a cross-sectional area that is elliptical and has a long axis 944 of length L that extends from a semicircular portion having a diameter Di to a semicircular portion having a diameter D₂. The shape of the tapered orifice 926 impacts a change in the flow of the fuel as the fifth retractable valve body 908 changes its position along a reciprocating axis 901. For example, the ratio D₂/D₁ impacts an extent of alignment between the tapered orifice 926 and a channel (e.g., the channel 128 of FIG. 2A) of an outer valve body (e.g., the outer valve body 110 of FIG. 2A) as the fifth retractable valve body 908 advances along the reciprocating axis 901. When the channel (e.g., the channel 128 of FIG. 2A) is aligned more with the D₂ end of the tapered orifice 926, more fuel flows from the channel (e.g., the channel 128 of FIG. 2A) and then through the tapered orifice 926 than when the channel (e.g., the channel 128 of FIG. 2A) is aligned more with the D₁ end of the tapered orifice 926. More fuel flows because D₂ is greater than D₁. In some embodiments, D₂/D₁ ranges from 0.25 to four. Further, for example, the length L impacts a transition from a more open valve position where the channel (e.g., the channel 128 of FIG. 2A) is aligned at the greater D₂ end of the tapered orifice 926 to a less open valve position where the channel (e.g., the channel 128 of FIG. 2A) is aligned at the lesser D₁ end of the tapered orifice 926. A ratio L/D₁ gives a measure of the transition from the more open valve position to the less open valve position. In some embodiments, L/D₁ ranges from one to twenty-five. Ratio D₂/D₁ can be used to control a relationship between increasing flow of fuel and a fuel spray angle at a fuel nozzle exit in such a manner that the fuel spray angle can be maintained constant, the fuel spray angle can decrease, or the fuel spray angle can increase as flow of the fuel increases.

FIG. 10A depicts a portion of a sixth retractable valve body 1008A having three orifices 1026a, 1026b, and 1026c. Each of the orifices 1026a, 1026b, and 1026c has a circular cross-sectional area having a diameter D₁, D₂, and D₃, respectively. The orifice 1026a is positioned a distance L₁ from its nearest neighbor orifice 1026b. The orifice 1026b is positioned a distance L₂ from its nearest neighbor orifice 1026c. The diameters D₁, D₂, and D₃ are designed to allow different open and partially open valve positions. For example, a larger diameter allows for a more open valve position when the orifice (e.g., 1026c) is aligned with a channel (e.g., the channel 128 of FIG. 2A). The lengths L₁ and L₂ are designed to control the transition from one valve state to another as the sixth retractable valve body 1008A moves along a reciprocating axis 1001A to align or to partially align the orifices 1026a, 1026b, and 1026c. For example, for some combinations of L₁ and D₂ at least two of the orifices 1026a, 1026b, and 1026c are at least partially aligned as the sixth retractable valve body 1008A moves along the reciprocating axis 1001A so that the flow of fluid is not interrupted as the channel (e.g., the channel 128 of FIG. 2A) aligns, partially aligns, and becomes misaligned with each of the orifices 1026a, 1026b, and 1026c, successively. In some embodiments, each distance Li and L₂ independently ranges from minus two times an average of the diameter D₁ or D₂ of the orifice of the slot and the diameter D₁ or D₂ of the orifice of the respective closest nearby slot to two times the average of the diameter D₁ or D₂ of the orifice (e.g., 1026a, 1026b, or 1026c) and the diameter D₁ or D₂ of a respective closest nearby orifice (e.g., 1026a, 1026b, or 1026c) where a distance less than zero indicates a staggered and overlapping configuration (See, e.g., FIG. 10B). D₁, D₂, D₃, L₁, L₂, can be used to control a relationship between increasing flow of fuel and a fuel spray angle at a fuel nozzle exit in such a manner that the fuel spray angle can be maintained constant, the fuel spray angle can decrease, or the fuel spray angle can increase as flow of the fuel increases. Three holes are, however, for reference, such that there could be more or fewer than three rows of holes.

FIG. 10B is a schematic view of a seventh retractable valve body 1008B having three orifices 1027a, 1027b, and 1027c in a staggered and overlapping configuration. Each of the orifices 1027a, 1027b, and 1027c has a circular cross-sectional area having a diameter D₁, D₂, and D₃, respectively. The orifice 1027a is positioned in a staggered and overlapping configuration a distance L₁ from its nearest neighbor orifice 1027b. The orifice 1027b is positioned in a staggered and overlapping configuration a distance L₂ from its nearest neighbor orifice 1027c. When the orifices (e.g., 1027a, 1027b, and 1027c) are positioned in a staggered and overlapping configuration, the lengths L₁ and L₂ are defined to be negative. In some embodiments, the retractable valve body has three or more slots, the orifice of each slot has a circular cross-sectional area having a diameter D₁, D₂, and D₃, respectively, the orifice of each slot is positioned a distance L₁ and L₂ from the orifice of a respective closest nearby slot, and each distance L₁ and L₂ range from minus two times an average of the diameter D₁, D₂, or D₃ of the orifice of the slot and the diameter D₁, D₂, or D₃ of the orifice of the respective closest nearby slot to zero such that the three or more slots are in a staggered and overlapping configuration. Having orifices positioned in a staggard and overlapping configuration allows for a smooth and continuous transition from the closed valve position to the open valve position as the seventh retractable valve body 1008B moves along the reciprocating axis 1001B.

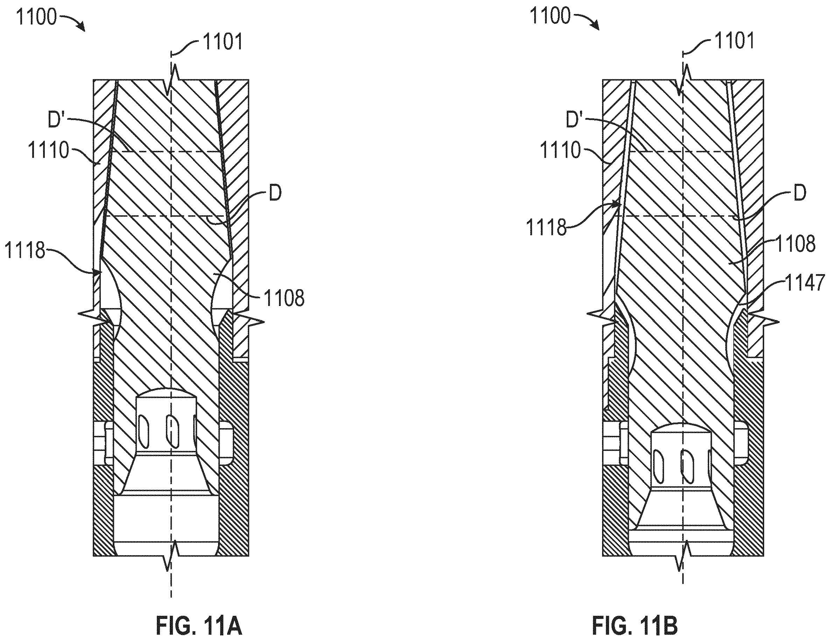

FIGS. 11A and 11B are schematic cross-sectional views of a portion of a second fuel injector 1100 embodiment. The second fuel injector 1100 embodiment depicted in FIGS. 11A and 11B is the same as the first fuel injector 100 embodiment depicted in FIGS. 2A and 2B except with a tapered inner passage 1118 having a tapered cross-sectional area, the tapered inner passage 1118 being positioned in a tapered outer valve body 1110. In FIGS. 11A and 11B, the tapered inner passage 1118 has a circular cross-sectional area perpendicular to a reciprocating axis 1101. The circular cross-sectional area has a diameter D, and D decreases over a portion of a distance along the direction of the reciprocating axis 1101. The tapered inner passage 1118 is tapered to receive a tapered retractable valve body 1108. The tapered retractable valve body 1108 has a cross-sectional area perpendicular to the reciprocating axis 1101. The cross-sectional area has a diameter D', and D' decreases along the reciprocating axis 1101. Tapering the diameter D of the tapered inner passage 1118 and tapering the diameter D' of the tapered retractable valve body 1108 allows for a variable cross-sectional area flow path for fuel passing through the tapered inner passage 1118 and around the tapered retractable valve body 1108. For example, FIG. 11A depicts a closed valve position where the tapered inner passage 1118 is blocked by tapered the retractable valve body 1108. FIG. 11B depicts an open valve position where fuel passes through a narrow fluid passage 1147 between the tapered inner passage 1118 and the tapered retractable valve body 1108. The embodiments of FIGS. 6, 7, 8, 9, and 10 can be used in combination with the second fuel injector 1100 embodiment depicted in FIGS. 11A and 11B.

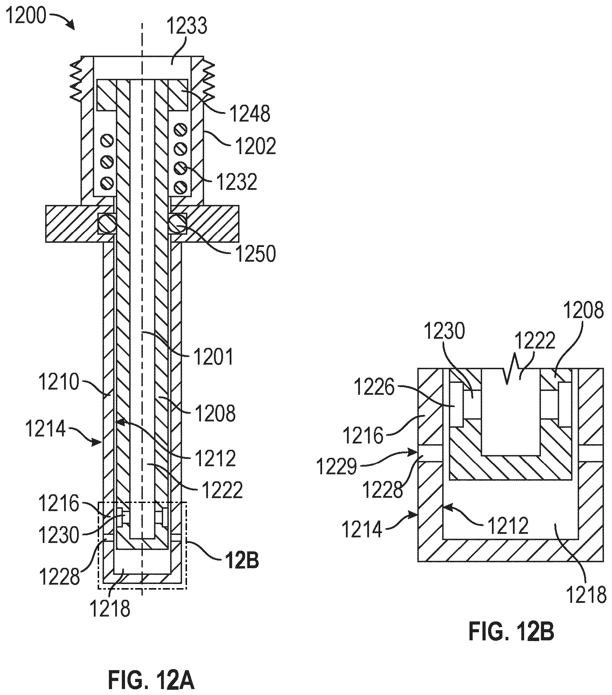

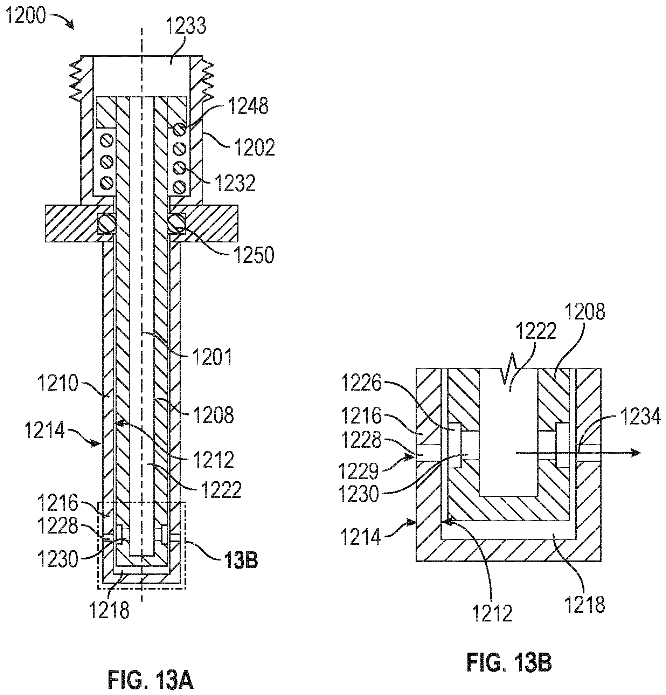

FIGS. 12A, 12B, 13A, and 13B are schematic views of a piston-type fuel injector 1200. Similar to the first fuel injector 100 depicted in FIGS. 2A and 2B, the piston-type fuel injector 1200 includes an outer valve body 1210 having an inner passage 1218 and a wall 1216 at least partially enclosing the inner passage 1218. In the piston-type fuel injector 1200, the outer valve body 1210 is a piston housing. The wall 1216 has an inner surface 1212, an outer surface 1214, and one or more channels 1228 passing through the wall 1216 between the outer surface 1214 of the wall 1216 and the inner surface 1212 of the wall 1216.

The piston-type fuel injector 1200 has a retractable valve body 1208 positioned within the inner passage 1218 of the piston housing (i.e., the outer valve body 1210). In the piston-type fuel injector 1200, the retractable valve body 1208 is a piston. The piston (i.e., the retractable valve body 1208) has one or more slots 1230 in fluid communication with a fluid spin chamber 1222. Each of the one or more slots 1230 has an orifice 1226 positioned in the inner passage 1218 of the piston housing (i.e., the outer valve body 1210), and the piston (i.e., the retractable valve body 1208) at least partially encloses the fluid spin chamber 1222.

In the piston-type fuel injector 1200, the fluid spin chamber 1222 is positioned to pass fuel from within the piston (i.e., the retractable valve body 1208) to outside the piston housing (i.e., the outer valve body 1210) when the retractable valve body 1208 is in an open valve position.

The piston-type fuel injector 1200 further includes a spring housing 1202 with a piston head chamber 1233 including a piston head 1248, a spring 1232, and a seal 1250, such as an O-ring or a gasket to retain fuel in the piston head chamber 1233. When pressurized fuel is provided to the piston head chamber 1233, pressure forces the spring 1232 to compress toward the seal 1250 allowing the piston (i.e., the retractable valve body 1208) to move along a reciprocating axis 1201 vertically downward in the view of FIGS. 12A and 13A. The movement of the piston (i.e., the retractable valve body 1208) moves the piston (i.e., the retractable valve body 1208) from the closed valve position to the open valve position. When the piston (i.e., the retractable valve body 1208) is in the open valve position, the fuel moves from the fluid spin chamber 1222, through the one or more slots 1230 on the piston (i.e., the retractable valve body 1208) passing through the orifice 1226 into the one or more channels 1228 with each channel 1228 leading to an injection orifice 1229. The one or more channels 1228 impart rotational motion (e.g., a swirling motion around the reciprocating axis 1201) on the fuel as the fuel passes into the combustion section 26 (FIG. 1) where the fuel is combusted to generate thrust. The rotational motion may be beneficial to performance of the fuel injector 1200 because the rotational motion reduces coking on surfaces contacted by the fuel.

FIG. 12A is a schematic cross-sectional view of a piston-type fuel injector, including a piston in a closed valve position, isolated from the turbine engine of FIG. 1, according to the present disclosure. FIG. 12B is a schematic cross-sectional detail view of the piston-type fuel injector showing detail 12B of FIG. 12A, according to the present disclosure. FIG. 12A depicts the piston-type fuel injector 1200 in a closed valve position. As seen in FIGS. 12A and 12B, the orifice 1226 of the slot 1230 is misaligned with the injection orifice 1229 in the wall 1216 of the outer valve body 1210. Thus, fuel does not pass from within the piston (i.e., the retractable valve body 1208) to outside the piston housing (i.e., the outer valve body 1210).

FIG. 13A is a schematic cross-sectional view of the piston-type fuel injector, including the piston in an open valve position, according to the present disclosure. FIG. 13B is a schematic cross-sectional detail view of the piston-type fuel injector showing detail 13B of FIG. 13A, according to the present disclosure. FIG. 13A depicts the piston-type fuel injector 1200 in an open valve position. As seen in FIGS. 13A and 13B, the orifice 1226 of the slot 1230 is aligned with the channel 1228 in the wall 1216 of the outer valve body 1210. Thus, fuel passes along a fuel path 1234 from within the piston (i.e., the retractable valve body 1208) to outside the piston housing (i.e., the outer valve body 1210).

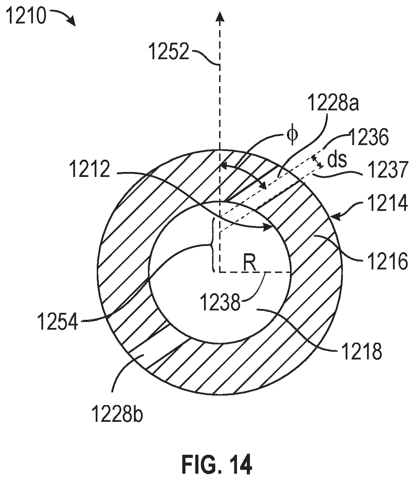

FIG. 14 is a cross-sectional view of the outer valve body 1210 of the piston-type fuel injector 1200. The one or more channels include a first channel 1228a and a second channel 1228b. The first channel 1228a has a through axis 1236 passing from the outer surface 1214 of the wall 1216 to the inner surface 1212 of the wall 1216 and the through axis 1236 makes an angle phi (ϕ) with a radial direction 1252 of the annular cross section. By varying the angle phi (ϕ), the fuel has a momentum with a momentum component along the through axis 1236, perpendicular to the through axis 1236, or both. The angle phi (ϕ) impacts the turbulence of the fuel as the fuel flows out of the inner passage 1218 which may, for example, impact the rate of coke buildup on surfaces contacted by the fuel. When phi (ϕ) is closer to zero degrees, the momentum of the fuel is more aligned in a direction perpendicular to the reciprocating axis 1201 than when phi (ϕ) is closer to sixty degrees. When the momentum of the fuel has a component that is perpendicular to the reciprocating axis 1201, the fuel develops a spinning motion around the reciprocating axis 1201. In some embodiments, phi (ϕ) ranges from zero degrees to sixty degrees.

The annular cross section has an inner radius 1238 of length R. The first channel 1228a has a cross sectional area with a through axis 1236 with a width of length d_{S} measured from the through axis to a side axis 1237. A shortest distance from the through axis 1236 to a center point of the annular cross-section is an orifice offset 1254. The orifice offset 1254 can range from zero to R-d_{S}/2. By varying the orifice offset 1254, the inner radius 1238 of length R, and d_{S}, the flow of the fuel passing between the injection orifice 1229 and the fluid spin chamber 1222 is controlled. For example, when the orifice offset 1254 is R-d_{S}/2, first channel 1228a imparts more spinning motion around the reciprocating axis 1201 to fuel as the fuel passes between the first channel 1228a and the fluid spin chamber 1222 than when the orifice offset 1254 is zero. The spinning motion around the reciprocating axis 1201 increases as phi (ϕ) increases towards sixty degrees which may, for example, impact the rate of coke buildup on surfaces contacted by the fuel.

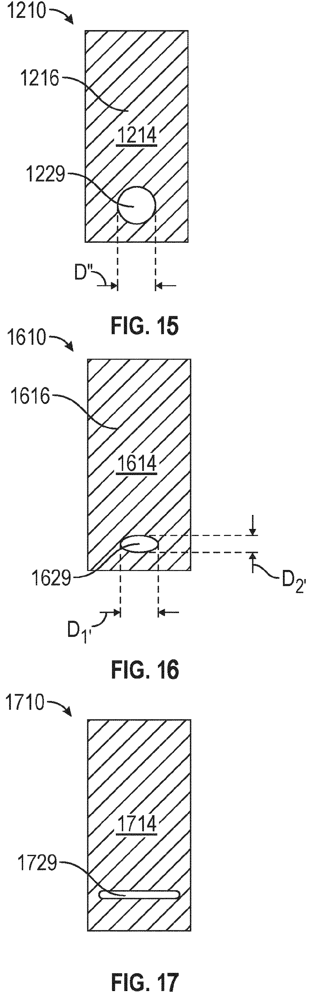

FIG. 15 is a schematic cross-sectional side view of a portion of the first piston housing, according to the present disclosure. FIG. 15 depicts a side view of a portion of the piston housing (i.e., the outer valve body 1210) showing the injection orifice 1229. The injection orifice 1229 has a circular cross-sectional area having a diameter D" where D" is measured at the outer surface 1214 of the wall 1216. The diameter D" of the injection orifice 1229 is adjusted to change a fuel flow rate of fuel passing from the fluid spin chamber 1222 out through the injection orifice 1229. For example, a larger diameter D" allows more fuel to pass through the injection orifice 1229 when the piston (i.e., the retractable valve body 1208) is in the open valve position.

FIG. 16 is a schematic cross-sectional side view of a portion of a second piston housing having an oval injection orifice, according to the present disclosure. FIG. 16 depicts a side view of a portion of a second piston housing (i.e., a second outer valve body 1610) with an oval injection orifice 1629 embodiment. The oval injection orifice 1629 passes through a wall 1616 second piston housing (i.e., a second outer valve body 1610), and the oval injection orifice 1629 has an elliptical cross-sectional area with a major diameter D₁, and a minor diameter D_{2'}. The major diameter D_{1'} and the minor diameter D_{2'} are measured at an outer surface 1614 of the wall 1616. Adjusting the major diameter D_{1'} and the minor diameter D_{2'} changes a flow profile for fuel exiting the oval injection orifice 1629. For example, a greater D₂ elongates the flow profile during a transition for the closed valve position to the open valve position, and a greater D_{1'} increases the maximum flow rate for the open valve position. The ratio of D_{2'}/D_{1'} can be used to control a relationship between increasing flow of fuel and a fuel spray angle at a fuel nozzle exit in such a manner that the fuel spray angle can be maintained constant, the fuel spray angle can decrease, or the fuel spray angle can increase as flow of the fuel increases.

FIG. 17 is a schematic cross-sectional side view of a portion of a third piston housing having a slot-shaped injection orifice, according to the present disclosure. FIG. 17 depicts a side view of a portion of a third piston housing (i.e., a second outer valve body 1710) with a slot-shaped injection orifice 1729 in an outer surface 1714. The slot-shaped injection orifice 1729 is used to achieve a short transition from the closed valve position to the open valve position where a flow rate of fuel passing through the slot-shaped injection orifice 1729 rapidly increases from zero in the closed valve position to a maximal flow rate in the open valve position. The slot-shaped injection orifice 1729 may be useful for delivering rapid pulses of fuel to the combustion section 26.

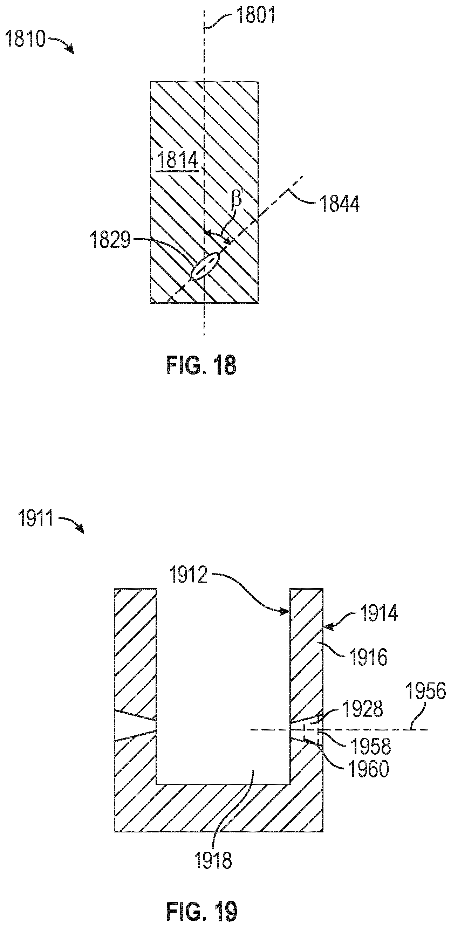

FIG. 18 is a schematic cross-sectional side view of a fourth piston housing having an angled injection orifice, according to the present disclosure. FIG. 18 depicts a side view of a portion of a fourth piston housing (i.e., a fourth outer valve body 1810) with an angled injection orifice 1829 in an outer surface 1814. The angled injection orifice 1829 has a long axis 1844 that defines an angle beta' (β') with a reciprocating axis 1801. Different values of the angle beta' (β') are useful for generating different flow profiles for fuel passing through the angled injection orifice 1829. For example, when the angle beta' (β') is near zero degrees, the flow profile has a longer open valve position than when the angle beta' (β') is near ninety degrees, because the long axis of the angled injection orifice 1829 is more aligned with the reciprocating axis 1801 when the angle beta' (β') is near zero degrees than when the angle beta (β') is near ninety degrees. Different flow profiles may be useful for improving combustion of the fuel in the combustion section 26.

FIG. 19 is a cross-sectional view of a portion of a fifth piston housing (i.e., a fifth outer valve body 1911) having a conical channel 1928 and an inner chamber 1918. The conical channel 1928 passes through a wall 1916 along a through axis 1956. The conical channel 1928 has a longer diameter 1958 and a shorter diameter 1960. The longer diameter 1958 is positioned closer to an outer surface 1914 of the wall 1916 whereas the shorter diameter 1960 is positioned closer to an inner surface 1912 of the wall 1916. The conical channel 1928 is used to adjust flow of a fuel passing through the conical channel 1928, for example, by atomizing the fuel as the fuel passes through the conical channel 1928.

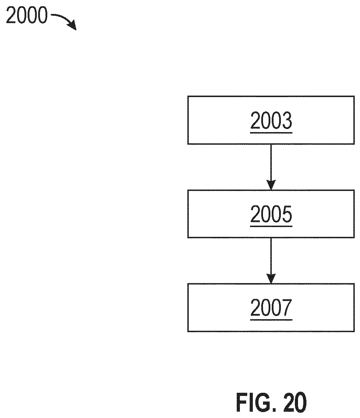

FIG. 20 depicts a method 2000 of injecting fuel into a combustion section 26. The method 2000 can be used with any of the disclosed fuel injectors including, for example, the first fuel injector 100 (FIG. 2A) and the piston-type fuel injector 1200 (FIGS. 12A-13B). As such, exemplary references numerals are provided with respect to the first fuel injector 100 and the piston-type fuel injector 1200 in describing the method. For example, the method 2000 includes applying (2003) a fluid pressure to a spring (e.g., 132 or 1232) of a fuel injector (e.g., 100 or 1200) such that a fluid pressure compresses the spring (e.g., 132 or 1232) causing a retractable valve body (e.g., 108 or 1208) to move along the reciprocating axis (e.g., 101 or 1201) from an at least one closed valve position to an at least one valve open valve position, passing (2005) fuel between a fluid spin chamber (e.g., 122 or 1222) of the retractable valve body (e.g., 108 or 1208) and an outer valve body (e.g., 110 or 1210), and injecting (2007) fuel into the combustion section 26 (FIG. 1). In some embodiments, the fluid pressure compresses the spring (e.g., 132 or 1232) causing the retractable valve body (e.g., 108 or 1208) to move along the reciprocating axis (e.g., 101 or 1201) from the closed valve position to a partially open valve position then to the valve open valve position. In some embodiments, passing fuel between the fluid spin chamber (e.g., 122 or 1222) of the retractable valve body (e.g., 108 or 1208) and the outer valve body (e.g., 110 or 1210) imparts rotational motion to the fuel. In some embodiments, the retractable valve body (e.g., 1208) is a piston, the outer valve body is a piston housing (e.g., 1210), and fuel passes from within the piston to outside the piston housing. In some embodiments, fuel passes around the retractable valve body (e.g., 108) before passing into fluid spin chamber (e.g., 122).

Accordingly, the fuel injectors (e.g., 100 and 1200) adjust the delta pressure and impart spin momentum to the fuel as the fuel passes between the channel (e.g., 128 and 1228) and the fluid spin chamber (e.g., 122 and 1222). A high delta pressure may increase the atomization of the fuel and the air, as compared to turbine engines 10 without the benefit of the present disclosure. Spin momentum may improve the fluid dynamics of the flow of fuel and, e.g., reduce coke buildup on surfaces contacted by the fuel. Increased momentum of the fuel jet from the fuel injector (e.g., 100 and 1200) may improve the atomization and mixing of the fuel and the air, thereby making the fuel and air mixture easier to ignite and to combust, as compared to turbine engines 10 without the benefit of the present disclosure. Thus, the fuel injector (e.g., 100 and 1200) provides for improved ignition capability, especially, for cold fuels (e.g., at higher altitudes) or high viscosity fuels by increasing the atomization of the fuel and the air. The injector (e.g., 100 and 1200) leads to improved sub-idle efficiency and low power efficiency of the combustion section 26 due to the increased atomization, and lower smoke generation at high power operation, as compared to turbine engines 10 without the benefit of the present disclosure.

Further aspects of the present disclosure are provided by the subject matter of the following clauses.

A gas turbine engine including a fuel injector having and a retractable valve body. The fuel injector has an outer valve body with an inner passage, and a wall at least partially enclosing the inner passage. The wall has an inner surface, an outer surface, and one or more channels passing through the wall between the outer surface of the wall and the inner surface of the wall. The retractable valve body is positioned within the inner passage of the outer valve body. The retractable valve body has one or more slots in fluid communication with an fluid spin chamber, each of the one or more slots have an orifice positioned in the inner passage of the outer valve body, wherein the retractable valve body at least partially encloses an fluid spin chamber. The retractable valve body is positioned within the inner passage to move along a reciprocating axis at one or more valve positions including an advanced valve position, a retracted valve position, an open valve position that at least partial aligns at least one of the one or more slots with at least one of the one or more channels to allow fluid communication between the fluid spin chamber of the retractable valve body and the at least one of the one or more channels, and a closed valve position wherein the fluid spin chamber of the retractable valve body is closed from fluid communication with the one or more channels.

The gas turbine engine of the preceding clause, such that the one or more slots, the one or more channels, or the one or more slots and the one or more channels impart a rotational motion around the reciprocating axis to fluid passing between the one or more channels and the fluid spin chamber.

The gas turbine engine of any of the preceding clauses, such that each of the one or more slots has a through axis from the orifice to the fluid spin chamber and the through axis makes an angle alpha with the reciprocating axis and alpha ranges from twenty degrees to ninety degrees.

The gas turbine engine of any of the preceding clauses, such that each of the one or more slots, each of the one or more channels, or each of the one or more slots and each of the one or more channels has a cross-sectional area, measured in a plane parallel to the reciprocating axis, wherein the cross-sectional area has a long axis and a short axis, and the long axis defines an angle beta with the reciprocating axis and a magnitude of beta ranges from zero degrees to ninety degrees.

The gas turbine engine of any of the preceding clauses, such that the orifice of each of the one or more slots has a long axis and a short axis, and the long axis makes an angle beta with the reciprocating axis and a magnitude of beta ranges from zero degrees to forty-five degrees.

The gas turbine engine of any of the preceding clauses, such that the orifice of each of the one or more slots has a cross-sectional area that is circular, elliptical, or has a long axis of a length L and a short axis, wherein the long axis extends from a semicircular portion having a diameter D₁ to a semicircular portion having a diameter D₂, and D₂/D₁ ranges from 0.25 to four and L/D₁ ranges from one to twenty-five.

The gas turbine engine of any of the preceding clauses, such that the retractable valve body has three or more slots, the orifice of each slot has a circular cross-sectional area having a diameter D, the orifice of each slot is positioned a distance L from the orifice of a respective closest nearby slot, and each distance L ranges from minus two times an average of the diameter D of the orifice of the slot and the diameter D of the orifice of the respective closest nearby slot to two times an average of the diameter D of the orifice of the slot and the diameter D of the orifice of the respective closest nearby slot where a distance less than zero indicates a staggered and overlapping configuration.

The gas turbine engine of any of the preceding clauses, such that the retractable valve body has three or more slots, the orifice of each slot has a circular cross-sectional area having a diameter D, the orifice of each slot is positioned a distance L from the orifice of a respective closest nearby slot, and each distance L ranges from minus two times an average of the diameter D of the orifice of the slot and the diameter D of the orifice of the respective closest nearby slot to zero such that the three or more slots are in a staggered and overlapping configuration.

The gas turbine engine of any of the preceding clauses, such that the inner passage has a circular cross-sectional area perpendicular to the reciprocating axis, the circular cross-sectional area has a diameter D, and D decreases over a portion of a distance along a direction of the reciprocating axis.

The gas turbine engine of any of the preceding clauses, such that each of the one or more channels has a cross-sectional area measured at the outer surface of the wall and the cross-sectional area is circular or elliptic.

The gas turbine engine of any of the preceding clauses, such that each of the one or more channels has a cross section taken along the reciprocating axis with a longer diameter and a shorter diameter, the longer diameter being positioned closer to the outer surface of the wall and the shorter diameter being positioned closer to the inner surface of the wall.

The gas turbine engine of any of the preceding clauses, such that the retractable valve body is a piston, the outer valve body is a piston housing, and the fluid spin chamber is positioned to pass fluid from within the piston to outside the piston housing.

The gas turbine engine of any of the preceding clauses, such that the retractable valve body is in contact with a spring and the spring applies a force on the retractable valve body towards a retracted valve position and the retracted valve position is closed.

The gas turbine engine of any of the preceding clauses, such that the fuel injector comprises a primary fuel nozzle and a secondary fuel nozzle, and the fluid spin chamber of the retractable valve body is in fluid communication with the secondary fuel nozzle.

The gas turbine engine of any of the preceding clauses, such that the valve positions include at least one fully open valve position that fully aligns at least one of the one or more slots with at least one of the one or more channels to allow fluid communication between the fluid spin chamber of the retractable valve body and the at least one of the one or more channels.

The gas turbine engine of any of the preceding clauses, such that the outer valve body has an annular cross section in a plane perpendicular to the reciprocating axis.

The gas turbine engine of any of the preceding clauses, such that each of the one or more channels has a through axis passing from the outer surface of the wall to the inner surface of the wall, the through axis makes an angle phi with a radial direction of the annular cross section, and phi ranges from zero degrees to sixty degrees.

The gas turbine engine of any of the preceding clauses, such that each of the one or more channels has an inner radius of length R, each of the one or more channels has a cross-sectional area in a plane perpendicular to the through axis, the cross-sectional area has a long axis of a length ds, and a shortest distance from the through axis to a center point of the annular cross-section ranges from zero to R-ds/2.

The gas turbine engine of any of the preceding clauses, further including a fuel nozzle tip in fluid communication with the fluid spin chamber of the retractable valve body, a fuel supply in fluid communication with the fuel injector, and a combustion section. The fuel injector is positioned to pass fluid through the fuel nozzle tip into the combustion section.

An aircraft comprising the gas turbine engine of any of the preceding clauses.

A method of operating a gas turbine engine of any of the preceding clauses, the method including moving the retractable valve body along the reciprocating axis from the closed valve position to the valve open valve position and passing a fuel between the fluid spin chamber of the retractable valve body and at least one of the one or more channels.

The method of the preceding clause, such that passing the fuel between the fluid spin chamber of the retractable valve body and the at least one of the one or more channels includes passing the fuel from the fluid spin chamber of the retractable valve body to the at least one of the one or more channels.

The method of any of the preceding clauses, such that passing the fuel between the fluid spin chamber of the retractable valve body and the at least one of the one or more channels includes passing the fuel from the at least one of the one or more channels to the fluid spin chamber of the retractable valve body.

The method of any of the preceding clauses, such that the one or more slots, the one or more channels, or the one or more slots and the one or more channels impart a rotational motion around the reciprocating axis to fluid passing between the one or more channels and the fluid spin chamber.

The method of any of the preceding clauses, such that each of the one or more slots has a through axis from the orifice to the fluid spin chamber, the through axis makes an angle alpha to the reciprocating axis and alpha ranges from twenty degrees to ninety degrees, and the one or more slots impart a rotational motion around the reciprocating axis to fluid passing between the one or more channels and the fluid spin chamber.

The method of any of the preceding clauses, such that each of the one or more slots, each of the one or more channels, or each of the one or more slots and each of the one or more channels has a cross-sectional area, measured in a plane parallel with the reciprocating axis, wherein the cross-sectional area has a long axis and a short axis, and the long axis defines an angle beta with the reciprocating axis and a magnitude of beta ranges from zero degrees to ninety degrees such that the one or more slots, the one or more channels, or the one or more slots and the one or more channels impart a rotational motion around the reciprocating axis to fluid passing between the one or more channels and the fluid spin chamber.

The method of any of the preceding clauses, such that the orifice of each of the one or more slots has a long axis and a short axis, and the long axis makes an angle beta with the reciprocating axis and a magnitude of beta ranges from zero degrees to forty-five degrees such that the one or more slots impart a rotational motion around the reciprocating axis to fluid passing between the one or more channels and the fluid spin chamber.

The method of any of the preceding clauses, such that the orifice of each of the one or more slots has a cross-sectional area that is circular, elliptical, or has a long axis of length L and a short axis, wherein the long axis extends from a semicircular portion having a diameter D₁ to a semicircular portion having a diameter D₂ and D₂/D₁ ranges from 0.25 to four and L/D₁ ranges from one to twenty-five such that the one or more slots impart a rotational motion around the reciprocating axis to fluid passing between the one or more channels and the fluid spin chamber.

The method of any of the preceding clauses, such that the retractable valve body has three or more slots, the orifice of each slot has a circular cross-sectional area having a diameter D, the orifice of each slot is positioned a distance L from the orifice of a respective closest nearby slot, and each distance L ranges from minus two times an average of the diameter D of the orifice of the slot and the diameter D of the orifice of the respective closest nearby slot to two times an average of the diameter D of the orifice of the slot and the diameter D of the orifice of the respective closest nearby slot, and such that moving the retractable valve body along the reciprocating axis from the closed valve position to the valve open valve position sequentially aligns each slot with at least one of the one or more channels.

The method of any of the preceding clauses, such that the retractable valve body has three or more slots, the orifice of each slot has a circular cross-sectional area having a diameter D, the orifice of each slot is positioned a distance L from the orifice of a respective closest nearby slot, and each distance L ranges from minus two times an average of the diameter D of the orifice of the slot and the diameter D of the orifice of the respective closest nearby slot to zero such that the three or more slots are in a staggered and overlapping configuration, and such that moving the retractable valve body along the reciprocating axis from the closed valve position to the valve open valve position sequentially aligns each slot with at least one of the one or more channels.

The method of any of the preceding clauses, such that the inner passage has a circular cross-sectional area perpendicular to the reciprocating axis, the circular cross-sectional area has a diameter D, and D decreases over a portion of a distance along a direction of the reciprocating axis such that moving the retractable valve body along the reciprocating axis from the closed valve position to the valve open valve position widens a fluid passage between the outer valve body and the retractable valve body.

The method of any of the preceding clauses, such that each of the one or more channels has a cross-sectional area measured at the outer surface of the wall, the cross-sectional area is circular or elliptical, and such that the one or more channels impart a rotational motion around the reciprocating axis to fluid passing between the one or more channels and the fluid spin chamber.

The method of any of the preceding clauses, such that each of the one or more channels has a cross section taken along the reciprocating axis with a longer diameter and a shorter diameter, the longer diameter being positioned closer to the outer surface of the wall and the shorter diameter being positioned closer to the inner surface of the wall such that passing the fuel between the fluid spin chamber of the retractable valve body and at least one of the one or more channels includes atomizing the fuel.

The method of any of the preceding clauses, such that the retractable valve body is a piston, the outer valve body is a piston housing, and the fluid spin chamber is positioned to pass fluid from within the piston to outside the piston housing, and passing the fuel between the fluid spin chamber of the retractable valve body and at least one of the one or more channels includes passing the fuel from inside the piston to outside the piston housing.

The method of any of the preceding clauses, such that the retractable valve body is in contact with a spring and the spring applies a force on the retractable valve body towards a retracted valve position, the retracted valve position is closed, and applying a fluid pressure to a spring of a gas turbine engine any of the preceding clauses, and such that passing the fuel between the fluid spin chamber of the retractable valve body and at least one of the one or more channels includes applying a fluid pressure to the spring such that the fluid pressure compresses the spring causing the retractable valve body to move along the reciprocating axis from the closed valve position to the valve open valve position.

The method of any of the preceding clauses, such that the fuel injector comprises a primary fuel nozzle and a secondary fuel nozzle, and the fluid spin chamber of the retractable valve body is in fluid communication with the primary fuel nozzle, and such that fuel that passes between the fluid spin chamber of the retractable valve body and at least one of the one or more channels then passes out of the primary fuel nozzle.

The method of any of the preceding clauses, such that each of the one or more channels has a through axis passing from the outer surface of the wall to the inner surface of the wall, wherein the through axis makes an angle phi with a radial direction of the annular cross section, and phi ranges from zero degrees to sixty degrees and such that the one or more channels impart a rotational motion around the reciprocating axis to fluid passing between the one or more channels and the fluid spin chamber.

The method of any of the preceding clauses, such that each of the one or more channels has an inner radius of length R, each of the one or more channels has a cross-sectional area in a plane perpendicular to the through axis, the cross-sectional area has a long axis of length d_{S}, and a shortest distance from the through axis to a center point of the annular cross section ranges from zero to R-d_{S}/2 and such that the one or more channels impart a rotational motion around the reciprocating axis to fluid passing between the one or more channels and the fluid spin chamber.

The method of any of the preceding clauses, such that the fuel injector includes a fuel nozzle tip in fluid communication with the fluid spin chamber of the retractable valve body, a fuel supply in fluid communication with the fuel injector, and a combustion section, and the fuel that passes between the fluid spin chamber of the retractable valve body and at least one of the one or more channels passes through the fuel nozzle tip into the combustion section.

A method of injecting fuel into a combustion section, the method including applying a fluid pressure to a spring of a gas turbine engine any of the preceding clauses, wherein the fluid pressure compresses the spring causing the retractable valve body to move along the reciprocating axis from the closed valve position to the valve open valve position, passing fuel between the fluid spin chamber of the retractable valve body and the outer valve body, and injecting fuel into the combustion section.

The method of the preceding clause, such that the fluid pressure compresses the spring causing the retractable valve body to move along the reciprocating axis from the closed valve position to a partially open valve position then to the valve open valve position.

The method of the preceding clause, such that passing fuel between the fluid spin chamber of the retractable valve body and the outer valve body imparts rotational motion to the fuel.

The method of the preceding clause, such that the retractable valve body is a piston, the outer valve body is a piston housing, and fuel passes from within the piston to outside the piston housing.

The method of the preceding clause, such that fuel passes around the retractable valve body before passing into fluid spin chamber.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A gas turbine engine (10) comprising:
a fuel injector (100) including:
an outer valve body (110) having:
an inner passage (118); and
a wall (116) at least partially enclosing the inner passage (118), the wall (116) having an inner surface (112), an outer surface (114), and one or more channels (128) passing through the wall (116) between the outer surface (114) of the wall (116) and the inner surface (112) of the wall (116); and
a retractable valve body (108) positioned within the inner passage (118) of the outer valve body (110), the retractable valve body (108) having, one or more slots (130) in fluid communication with a fluid spin chamber (122), each of the one or more slots (130) having an orifice (126) positioned in the inner passage (118) of the outer valve body (110), wherein the retractable valve body (108) at least partially encloses the fluid spin chamber (122),
wherein the retractable valve body (108) is positioned within the inner passage (118) to move along a reciprocating axis (101) at one or more valve positions including an advanced valve position, a retracted valve position, an open valve position that at least partial aligns at least one of the one or more slots (130) with at least one of the one or more channels (128) to allow fluid communication between the fluid spin chamber (122) of the retractable valve body (108) and the at least one of the one or more channels (128), and a closed valve position, wherein the fluid spin chamber (122) of the retractable valve body (108) is closed from fluid communication with the one or more channels (128).

2. The gas turbine engine (10) of claim 1, wherein the one or more slots (130), the one or more channels (128), or the one or more slots (130) and the one or more channels (128) impart a rotational motion around the reciprocating axis (101) to fluid passing between the one or more channels (128) and the fluid spin chamber (122); optionally, wherein each of the one or more slots (130) has a through axis (136) from the orifice (126) to the fluid spin chamber (122) and the through axis (636) makes an angle alpha to the reciprocating axis (101) and alpha ranges from twenty degrees to ninety degrees.

3. The gas turbine engine (10) of any preceding claim, wherein each of the one or more slots (130), each of the one or more channels (128), or each of the one or more slots (130) and each of the one or more channels (128) has a cross-sectional area, measured in a plane parallel with the reciprocating axis (101), wherein the cross-sectional area has a long axis (844) and a short axis (845), and the long axis (844) defines an angle beta with the reciprocating axis (101) and a magnitude of beta ranges from zero degrees to ninety degrees; optionally, wherein the orifice (126) of each of the one or more slots (130) has a long axis (844) and a short axis (845), and the long axis (844) makes an angle beta with the reciprocating axis (101) and a magnitude of beta ranges from zero degrees to forty-five degrees.

4. The gas turbine engine (10) of any preceding claim, wherein the orifice (126) of each of the one or more slots (130) has a cross-sectional area that is circular, elliptical, or has a long axis (944) of length L, wherein the long axis (944) extends from a semicircular portion having a diameter D₁ to a semicircular portion having a diameter D₂ and D₂/D₁ ranges from 0.25 to four and L/D₁ ranges from one to twenty-five.

5. The gas turbine engine (10) of any of claims 1 to 4, wherein the retractable valve body (108) has three or more slots, the orifice (1026a, 1026b, 1026c) of each slot has a circular cross-sectional area having a diameter D, the orifice (1026a, 1026b, 1026c) of each slot is positioned a distance L from the orifice (1026a, 1026b, 1026c) of a respective closest nearby slot, and each distance L ranges from minus two times an average of the diameter D of the orifice (1026a, 1026b, 1026c) of the slot and the diameter D of the orifice (1026a, 1026b, 1026c) of the respective closest nearby slot to two times an average of the diameter D of the orifice (1026a, 1026b, 1026c) of the slot and the diameter D of the orifice (1026a, 1026b, 1026c) of the respective closest nearby slot where a distance less than zero indicates a staggered and overlapping configuration.
5. The gas turbine engine (10) of any of claims 1 to 4, wherein the retractable valve body (108) has three or more slots, the orifice (1026a, 1026b, 1026c) of each slot has a circular cross-sectional area having a diameter D, the orifice (1026a, 1026b, 1026c) of each slot is positioned a distance L from the orifice (1026a, 1026b, 1026c) of a respective closest nearby slot, and each distance L ranges from minus two times an average of the diameter D of the orifice (1026a, 1026b, 1026c) of the slot and the diameter D of the orifice (1026a, 1026b, 1026c) of the respective closest nearby slot to two times an average of the diameter D of the orifice (1026a, 1026b, 1026c) of the slot and the diameter D of the orifice (1026a, 1026b, 1026c) of the respective closest nearby slot where a distance less than zero indicates a staggered and overlapping configuration.

6. The gas turbine engine (10) of any of claims 1 to 4, wherein the retractable valve body (108) has three or more slots, the orifice (1027a, 1027b, 1027c) of each slot has a circular cross-sectional area having a diameter D, the orifice (1027a, 1027b, 1027c) of each slot is positioned a distance L from the orifice of a respective closest nearby slot, and each distance L ranges from minus two times an average of the diameter D of the orifice (1027a, 1027b, 1027c) of the slot and the diameter D of the orifice (1027a, 1027b, 1027c) of the respective closest nearby slot to zero such that the three or more slots are in a staggered and overlapping configuration.

7. The gas turbine engine (10) of any preceding claim, wherein the inner passage (1018) has a circular cross-sectional area perpendicular to the reciprocating axis (1101), the circular cross-sectional area has a diameter D, and D decreases over a portion of a distance along a direction of the reciprocating axis (1101).

8. The gas turbine engine (10) of any preceding claim, wherein each of the one or more channels (1228) has a cross-sectional area measured at the outer surface (1214) of the wall (1216) and the cross-sectional area is circular or elliptical; optionally, wherein each of the one or more channels (1128) has a cross section taken along the reciprocating axis (1101) with a longer diameter and a shorter diameter, the longer diameter being positioned closer to the outer surface of the wall (1116) and the shorter diameter being positioned closer to the inner surface of the wall (1116).

9. The gas turbine engine (10) of any preceding claim, wherein the retractable valve body (1208) is a piston, the outer valve body (1210) is a piston housing, and the fluid spin chamber (1222) is positioned to pass fluid from within the piston to outside the piston housing.

10. The gas turbine engine (10) of any preceding claim, wherein the retractable valve body (108) is in contact with a spring (132) and the spring (132) applies a force on the retractable valve body (108) towards a retracted valve position, and the retracted valve position is closed.

11. The gas turbine engine (10) of any preceding claim, wherein the fuel injector comprises a primary fuel nozzle (125) and a secondary fuel nozzle (124), and the fluid spin chamber (122) of the retractable valve body (108) is in fluid communication with the primary fuel nozzle (125).

12. The gas turbine engine (10) of any preceding claim, wherein the one or more valve positions include at least one fully open valve position that fully aligns at least one of the one or more slots (130) with at least one of the one or more channels (128) to allow fluid communication between the fluid spin chamber (122) of the retractable valve body (108) and the at least one of the one or more channels (128).

13. The gas turbine engine (10) of any preceding claim, wherein the outer valve body (1210) has an annular cross section in a plane perpendicular to the reciprocating axis (1201); optionally, wherein each of the one or more channels (1228a, 1228b) has a through axis (1236) passing from the outer surface (1214) of the wall (1216) to the inner surface (1212) of the wall (1216), wherein the through axis (1236) makes an angle phi with a radial direction (1252) of the annular cross section, and phi ranges from zero degrees to sixty degrees; optionally, wherein each of the one or more channels (1228a, 1228b) has an inner radius (1238) of length R, each of the one or more channels (1228a, 1228b) has a cross-sectional area in a plane perpendicular to the through axis (1236), the cross-sectional area has a long axis of length ds, and a shortest distance from the through axis (1254) to a center point of the annular cross section ranges from zero to R-ds/2.

14. The gas turbine engine (10) of any preceding claim, further comprising a fuel nozzle tip (120) in fluid communication with the fluid spin chamber (122) of the retractable valve body (108), a fuel supply in fluid communication with the fuel injector, and a combustion section (26), wherein the fuel injector is positioned to pass fluid through the fuel nozzle tip (120) into the combustion section (26).

15. An aircraft comprising the gas turbine engine (10) of claim 14.
